(19) **Europäisches Patentamt European Patent Office Office européen des brevets**

(11) **EP 2 252 456 B1**

(12) **EUROPEAN PATENT SPECIFICATION**

(45) Date of publication and mention
of the grant of the patent:
**13.06.2018 Bulletin 2018/24**

(21) Application number: **09709425.4**

(22) Date of filing: **06.02.2009**

(51) Int Cl.:
*B32B 15/14* *(2006.01)*      *B32B 5/12* *(2006.01)*
*B32B 7/12* *(2006.01)*      *B32B 15/18* *(2006.01)*
*B32B 3/02* *(2006.01)*      *B32B 3/04* *(2006.01)*
*B32B 3/06* *(2006.01)*      *F16L 59/02* *(2006.01)*
*F16L 59/08* *(2006.01)*      *F16L 59/10* *(2006.01)*

(86) International application number:
**PCT/FI2009/050098**

(87) International publication number:
**WO 2009/098361 (13.08.2009 Gazette 2009/33)**

(54) **MINERAL WOOL ELEMENT, MANUFACTURING METHOD THEREOF AND METHOD FOR INSULATING CURVED SURFACES**

MINERALWOLLEELEMENT, HERSTELLUNGSVERFAHREN DAFÜR UND VERFAHREN ZUM ISOLIEREN VON GEKRÜMMTEN FLÄCHEN

ELÉMENT LAINE MINÉRALE ET SON PROCÉDÉ DE FABRICATION, ET PROCÉDÉ D ISOLATION DE SURFACES INCURVÉES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.02.2008 FI 20085116**

(43) Date of publication of application:
**24.11.2010 Bulletin 2010/47**

(73) Proprietor: **Paroc Group Oy**
**00180 Helsinki (FI)**

(72) Inventors:
• **SEPPÄNEN, Esa**
**54915 Saimaanharju (FI)**

• **SATKA, Lasse**
**00800 Helsinki (FI)**
• **HEVOSMAA, Risto**
**86400 Vihanti (FI)**

(74) Representative: **LEITZINGER OY**
**Tammasaarenkatu 1**
**00180 Helsinki (FI)**

(56) References cited:
**EP-A- 1 152 096      EP-A1- 1 475 224**
**EP-B- 1 290 288      DE-U1-202006 003 586**
**GB-A- 2 008 491      US-A- 4 025 680**

**Description**

**Object of the invention**

One object of the invention is a mineral wool element, comprising an insulating mineral wool layer with two opposite main surfaces, one of the two opposite main surfaces of the mineral wool layer is clad with a pliable sheet metal and the other made up by bare mineral wool, the sheet-metal clad mineral wool layer being pliable jointly with the sheet metal.

A second object of the invention is a method for the fabrication of a mineral wool element according to the invention.

Still another object of the invention is a method for insulating curvilinear surfaces with mineral wool and providing the same with a cladding sheet metal protecting the outside of mineral wool placed on a curvilinear surface.

A further object of the invention is a wind-load resistant structure, comprising a curvilinear building surface, an insulation layer of mineral wool installed thereon, and a sheet metal skin protecting the outside of this insulation layer.

**Prior art**

In prior art, the insulation of curvilinear surfaces, such as for example the outer walls of cylindrical storage tanks, with mineral wool has been highly laborious and tedious because of a plurality of different operations. For example, the insulation work of major industrial containers (diameter >8 m) has involved a lot of manual installation labor, such as the installation of support structures, a wool lining, and covering sheet metals from a scaffolding erected around the tank. The installation of support structures has involved making a reinforcement system around an upright storage tank, as well as welding insulation attachment studs and brackets to the reinforcement. This has been followed by securing the insulation in the form of mats or slabs onto the outer surface of the tank by means of the studs. All junctions have been caulked with loose mineral wool. Finally, section sheet metals have been secured for cladding the wool lining.

The above-described approach has been a common way of insulating upright storage tanks and it is described in standard SFS 3978 of the Finnish Standards Association. This common way has been highly laborious and tedious.

Further prior art is presented below.

In DE202006003586U1 is disclosed a thermal pipe insulation in sheet form, having a mineral wool layer with a metal foil coating, preferably an aluminum foil.

In US4025680A is described a flexible, bendable fibrous thermal insulation for cylindrical objects. This insulation comprises abutting, parallel strips of fibrous insulating material, wherein the fiber orientation in each strip is at right angles to the fiber orientation of each of the abutting strips. The fiber orientation of every second strip is disposed substantially circumferentially of the axis of said cylindrical object, and the fiber orientation of the remaining strips is disposed substantially radially of the axis of said cylindrical object. Said insulation also has retention means comprising an overlying layer of flexible sheet jacketing material to which the abutting strips are adhered to retain the strips in abutting relationship.

GB 2 008 491 A describes a method of manufacturing a mineral fibrous product being coated with a metal foil, particularly an aluminum foil. The mineral fibrous product may e.g. be a plate, and there is an intermediate support layer consisting of a glass non-woven web or fabric between the plate and the aluminum foil. The aluminum foil is stocked on a reel in a rolled-up manner.

In paragraph [0003] of EP 1 475 224 A1 is referred to a type of product, used in the past, consisting of a mineral wool blanket having its fibres impregnated with an organic size and having one or both its faces either without covering or covered with an aluminum sheet.

The Applicant has now invented a new approach with fewer operations, whereby the insulation work for curvilinear surfaces can be remarkably simplified and accelerated, resulting in reduced costs.

**Disclosure of the invention**

In view of eliminating the prior art problems, a mineral wool element of the invention is characterized in that the mineral wool layer comprises a slab assembly consisting of lamellar sheets of mineral wool with fibers at an orientation of 90° relative to the mineral wool element's main surfaces, and that the mineral wool element has at least two of its opposite ends provided with tongues and grooves.

On the other hand, a method of the invention for the fabrication of a mineral wool element is characterized in that one of the two main surfaces of a mineral wool layer is clad with a pliable sheet metal and the other is left unclad, the mineral wool layer of a thus obtained mineral wool element being pliable jointly with the sheet metal. On the other hand, a method of the invention for insulating curvilinear surfaces is characterized in that on a curvilinear surface being a substantially cylindrical storage tank's jacket surface with a radius of not less than 4 m are installed one or more mineral wool elements as set forth in any one of claims 1-3, or mineral wool elements fabricated according to the method of claim 4, by bending the mineral wool element in question substantially to the conformity with the curvilinear surface geometry in such a way that, of two opposite main surfaces of the mineral wool element, the one made up by bare mineral wool becomes placed against said curvilinear surface to be insulated, and in that the mineral wool elements are secured to each other with tongues and grooves, present at least in a vertical direction thereof, and to the surface to be insulated with fastening elements.

As already presented above, the invention further relates to a wind-load resistant structure, comprising a curvilinear building surface, an insulation layer of mineral wool installed thereon, and a sheet metal skin protecting the outside of this insulation layer. In this structure according to the invention, for which protection has been claimed in the independent claim 8, the curvilinear surface is a cylindrical storage tank's outer wall having a diameter of 4 m or more, and said curvilinear surface has installed thereon one or more mineral wool elements as set forth in any one of claims 1-3, or mineral wool elements fabricated according to the method of claim 4, which have been brought by bending substantially to the conformity with the curvilinear surface geometry, and that, of two opposite main surfaces of the mineral wool element, the one made up by bare mineral wool is placed against said curvilinear surface to be insulated, whereby the sheet metal skin and the mineral wool layer in attachment therewith function jointly as a composite structure, by virtue of which the membrane forces developed on the sheet metal skin of a mineral wool element as a result of wind pressure and suction are passed into the mineral wool layer having a sufficient compression strength, wherefrom the compression forces are passed further to a tank wall with uniform compression.

In one preferred embodiment for a mineral wool element of the invention, the mineral wool layer is adhesive-bonded to the sheet metal cladding. The mineral wool layer is in the form of a mineral wool slab. In a mineral wool mat or slab, the fibers are generally settled in a substantially longitudinal direction of the slab or mat (orientation 0°). In slabs made up by lamellar sheets of mineral wool (lamellar slab), the mineral fibers are at right angles (orientation 90°) relative to the lamellar slab's major surfaces. Such lamellar slabs have the maximum compression strength at right angles relative to the lamellar slabs' major surfaces, whereas the thermal conductivity thereof is higher, which means that the insulation capacity is respectively lower. On the other hand, the mineral wool slab or mat, in which the orientation of fibers is substantially 0°, has a lower thermal conductivity and thereby a better insulation capacity. In this case, the product again has a lesser compression strength. Alternatives for these two options come in the form of such lamellar products (slabs or mats), in which the orientation of fibers lies between 0° and 90°, whereby a desired compromise solution can be reached with a compression strength sufficient for the purpose and a thermal conductivity respectively sufficient for the purpose.

In addition to inventing a new approach with fewer operations, by which the installation work for curvilinear surfaces can be remarkably simplified and accelerated, thereby reducing costs, the Applicants have discovered that their invention is much more wind-load resistant than the prior art solutions. This effect is achieved when the sheet metal skin and the mineral wool layer attached thereto e.g. by adhesive bonding (or by any other way known to a skilled artisan) function as a composite structure. By virtue of its composite structure, the membrane forces developed on the sheet metal skin of a mineral wool element as a result of wind pressure and suction are passed into the mineral wool layer having a sufficient compression strength, wherefrom the compression forces are passed further to a tank wall with uniform compression. As a result, the loads applied to the tank are distributed more evenly than in the traditional prior art method.

What is the sufficient compression strength in each case depends on the size of an object to be insulated, i.e. on the size of a tank's diameter, for example. If the question is e.g. about a fairly large-size tank (4 m or more in diameter), a sufficient compression strength is attained by using mineral wool elements of the invention, in which the slab-shaped insulation layer is substantially constituted by lamellar sheets of mineral wool with the fibers at an orientation of 90° relative to the mineral wool element's main surfaces. If the object to be insulated is a smaller tank, it is possible to attain a sufficient compression strength by using a "regular" mineral wool slab (fiber orientation 0°) as a mineral wool layer in an element of the invention. In some other insulation projects, a sufficient compression strength can also be reached by means of a lamellar slab (or mat), in which the fiber orientation relative to the mineral wool element's main surfaces is between 0° and 90°.

In the structure of the invention, the curvilinear building surface is a cylindrical storage tank's outer wall, whereby the structure's mineral wool layer has been selected to have a sufficient compression strength depending on a size of the tank's diameter. In the structure of the invention the tank to be insulated has a diameter of 4 m or more, wherein the mineral wool layer must have its fibers at an orientation of 90° relative to the mineral wool layer's main surfaces.

In another preferred embodiment for a structure of the invention the mineral wool elements have vertical tongue-and-groove joints which are further secured by screws.

In another preferred embodiment of the mineral element, the sheet metal consists of a sheet metal which is rustproof or coated with an anti-corrosive covering.

In this application, the term "sheet metal" is used in reference to a thin plate composed of metal, wherein the metal can be any metal, such as e.g. steel or a metal alloy. Thus, the "rustproof sheet metal" may refer e.g. to zinc coated steel. In addition, the sheet metal can be coated with some anti-corrosive covering, such as plastic.

In one preferred embodiment for a method of the invention intended for insulating curvilinear surfaces the fastening elements be secured through the elements at least across the tongue-and-groove joints, such that the fastening element extends through both pairs of tongues and grooves in a tongue-and-groove joint. It is also preferred that the installation placement of mineral wool elements be performed by means of hoists. The hoisting can be conducted by using either lifting devices provided with suction pads or mechanical grippers capable of grabbing insulation elements and lifting the same.

The invention enables reaching a clearly increased rate of installation speed and, moreover, the novel installation procedure does not require specialists' work input to the same extent as the traditional solution as there are distinctly fewer operations involved. By using the insulation method and insulation element of the invention, it is possible to attain an installation rate of 200-300 m$^2$/day. The insulation method and insulation element of the invention are particularly useful for insulating the outer walls of cylindrical storage tanks. In case the insulation elements are installed in vertical orientation, and are for example 1200 mm in width, said elements are particularly useful for insulating the outer walls of such cylindrical storage tanks which measure more than 8 m in diameter. There is no actual upper limit for the diameter of a tank, but a typical diameter for large-size tanks is 52 m.

### Drawings

The invention will now be described more closely by way of example with reference to the accompanying drawings, in which:

Fig. 1a shows a mineral wool element of the prior art in a perpendicular width-wide cross-section, which element can be used for fabricating an insulation element of the invention,

Fig. 1b shows an insulation element of the invention in one preferred embodiment, which is obtained by splitting the element of fig. 1a relative to its thickness,

Fig. 2a shows a mineral wool element of the invention in its application as insulation for the outer walls of an upright storage tank in a cross-section from above the storage tank,

Fig. 2b is an enlarged view of a detail in fig. 2a,

Fig. 3 shows the embodiment of fig. 2a in a perpendicular side view,

Fig. 4 shows the stresses applied to a skin 1 and an insulation core 2 of insulation elements 7 installed vertically on a storage tank's cylindrical outer wall, and

Fig. 5 shows the effect of a wind suction force F on the outer surface of insulation elements.

### Example

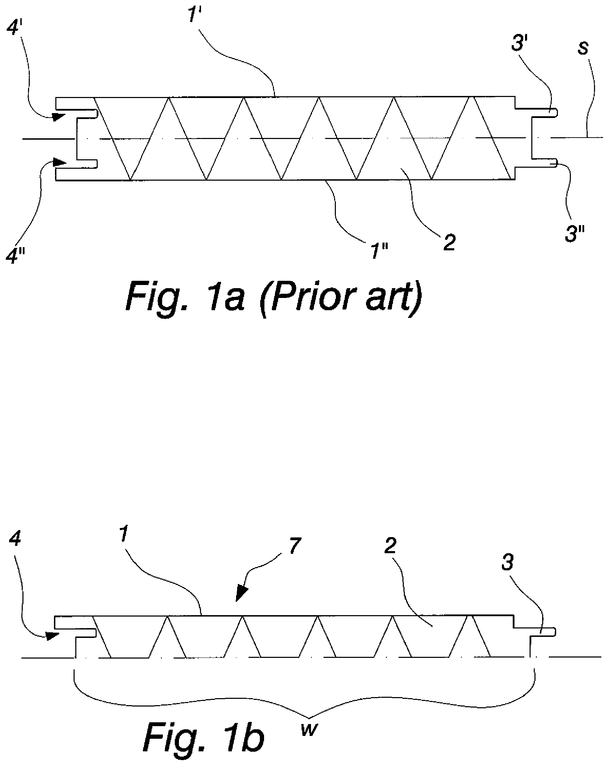

Fig. 1a illustrates a prior art insulation element, consisting of a core 2 in the shape of a mineral wool slab between two sheet metal skins 2. The mineral wool core 2 can be for example a rockwool slab whose fibers, in longitudinal directions thereof, extend in a direction substantially perpendicular to the main surfaces of sheet metals 1' and 1". This prior art element has its two longer edges provided with double tongues and grooves. Along one longer flank extend tongues 3' and 3" and along the other longer flank respectively two grooves 4' and 4". The prior art insulation element can be fabricated, according to the prior art, by gluing the sheet metals 1' and 1" to two main surfaces of the mineral wool slab core 2.

The Applicants have now invented that a mineral wool element 7, which essentially consists of a mineral wool slab 2 having just one of its two opposite main surfaces lined with a sheet metal 1, the other main surface being thus made up by bare mineral wool, is exactly appropriate in terms of its pliability for insulating curvilinear, such as e.g. convex or concave, surfaces. Such mineral wool elements according to the invention can be fabricated for example by sawing a prior art mineral wool element shown in fig. 1a for two halves relative to the direction of its thickness. Hence, there is obtained an insulation element 7 shown in fig. 1b, which is good for insulating curvilinear surfaces and which consists of a rockwool slab 2 with one of its main surfaces having a sheet metal cladding 1 adhesive-bonded thereto. This insulation element 7 has one of its longer flanks provided with one tongue 3 worked on the sheet metal 1 and its opposite longer flank provided with one groove 4 worked on the sheet metal 1.

This type of two-layer element 7 of the invention need not necessarily be fabricated by sawing a sandwich element of the prior art in two, but it can also be manufactured in such a way that to a mineral wool slab or mat 2, on one of its main surfaces, is adhesive-bonded a sheet metal 1, which has a pre-existing tongue 3 and a pre-existing groove 4 extending along its two opposite flanks.

The sheet metal 1 is conveniently plastic-coated for higher resistance to ambient weather conditions and for protecting the sheet metal from rusting.

The two-layer rockwool element 7 lends itself particularly well to vertical installation on an outer surface 5 of upright storage tanks 8, meaning that the tongue 3 and the groove 4 position themselves respectively in a vertical position relative to the groove 4 and the tongue 3 of another rockwool element 7 to be placed alongside. The rockwool element 7 does not have tongues and grooves on its two shorter flanks.

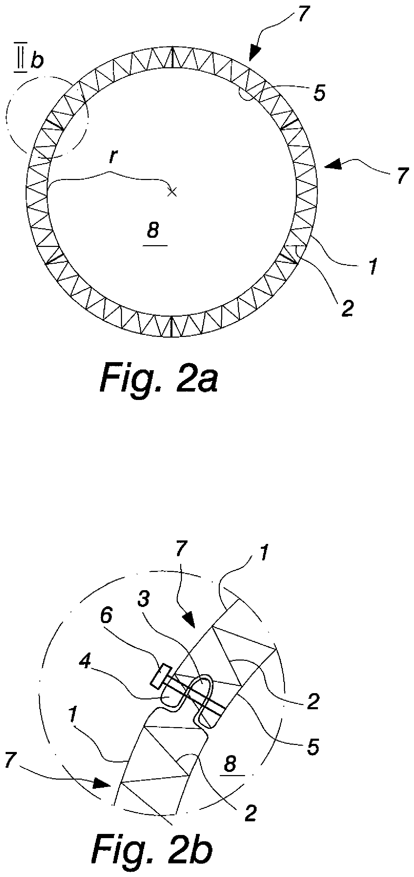

Fig. 2a shows in a plan view and in cross-section a cylindrical storage tank 8 insulated with insulation elements 7. If the insulation element 7 is for example 1200 mm in width, it will be particularly useful for vertical installation around such a storage tank 8 which has a radius r of more than 4 m. There is no absolute upper limit for the radius r, but the largest cylindrical storage tanks 8 have had the radius r of 26 m.

In fig. 2b, which is an enlarged detail from fig. 1a, there is shown one option of ensuring the reliability of tongue-and-groove joints established by the tongue and groove 3 and 4. This option is based on using screws 6 for screwing the connections of tongues and grooves to the engagement with the storage tank's 8 outer wall 5, such that each screw 6 extends through both grooves and tongues 4 and 3 of a tongue-and-groove joint.

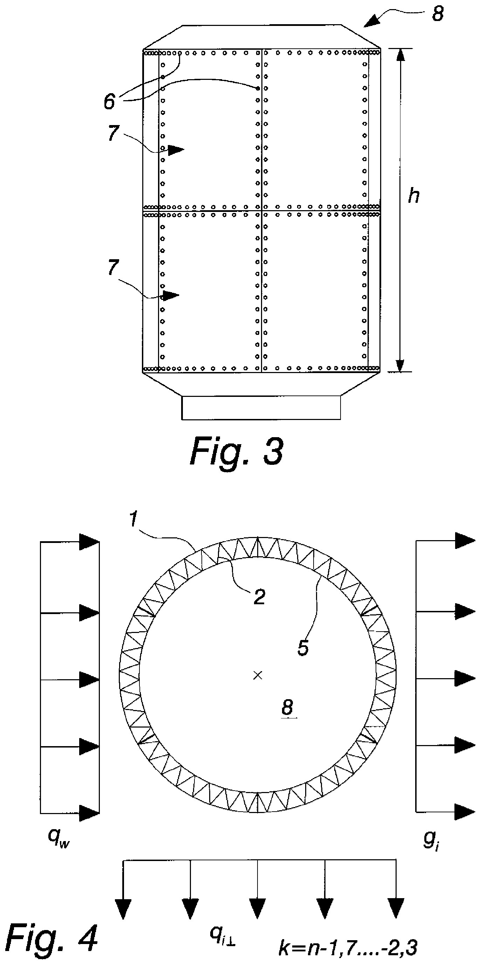

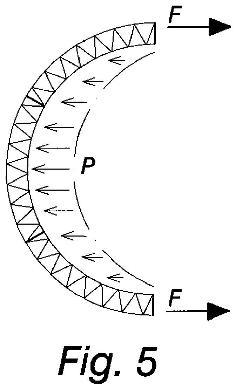

The reason why the vertical joints established by the tongues and grooves 3 and 4 must be further secured by means of the screws 6 is the Applicants' discovery that provided this way around the storage tank 8 is a shell which is capable of withstanding the membrane forces produced by wind suction loads. However, this ability to withstand or absorb membrane forces requires that the mineral wool layer be provided with a sufficient amount of compression strength. In this example, the sufficient compression strength is obtained by using an insulation layer 2 made up by lamellar sheets of mineral wool, in which the fibers, as regards the longitudinal directions thereof, are substantially perpendicular to an external sheet metal skin 1. The more densely there are screws 6 received vertically in the connections, as well as also in the horizontal edges (which have no tongue-and-groove joints) of the insulation elements 7, the more reliably the insulation elements making up an outer skin for the storage tank 8 remain stationary and withstand the wind load. As a result of the rockwool sheets' high compression strength, the insulation layer 2 has a capability of absorbing those compression forces which develop in response to a reaction force (i.e. counter-force) of the wind pressure and the membrane forces. Thus, the membrane forces resulting from the wind suction are passed by way of a sheet metal skin into a mineral wool layer, which, by virtue of its compression strength, transmits such forces to the storage tank's wall. This principle is depicted in figs. 4 and 5.

Fig. 4 illustrates the stresses applied to a skin 1 and a core 2 of the insulation elements 7 installed vertically of the storage tank 8. When the wind pressure is $q_w$, the wind suction in the wind direction is $q_i$ and k = n -0,5...-0,7 and the wind suction perpendicularly to the wind direction is $q_i$ and k = n -1,7...-2,3.

A force F, resulting from wind suction and acting on the sheet metal skin 1 of each insulation element 7, is calculable by means of a formula (1)

$$F = \sum {}^* q_i {}^* d/2 \qquad\qquad (1)$$

in which d is a storage tank's diameter.

A maximum pressure $p_{max}$ acting on the core 2 of each insulation element 7 can be calculated by means of a formula (2)

$$p_{max} = k_1 {}^* q_w + k_2 {}^* F/d \qquad\qquad (2)$$

in which coefficients $k_1$ and $k_2$ result from a non-linearity of the cylindrical surface and a magnitude of the coefficients is determined from trade literature. The wind suction force F has its effect depicted in fig. 5.

Depicted in fig. 3 is the principle that it is advisable to secure the screws in a sufficient density for providing a durable external shell made up by insulation elements 7. The insulation elements 7 are installed on an outer wall 5 of the storage tank 8 by bending this particular mineral wool element 7 substantially to the conformity with the curvilinear outer wall's 5 geometry in such a way that, of two opposite main surfaces of the two-layer sheet metal-mineral wool element 7, the one made up by bare mineral wool becomes placed against said curvilinear outer wall 5. As pointed out even above, the element 7 according to this example is particularly useful as insulation for the external jacket surface of such a cylindrical storage tank which has a radius of not less than 4 m. The installation placement of mineral wool elements 7 is performed by means of hoists. The hoists are provided with lifting elements which may comprise suction pads or mechanical grippers.

**Claims**

1. A mineral wool element (7), comprising an insulating mineral wool layer (2) with two opposite main surfaces, one of the two opposite main surfaces of the mineral wool layer (2) is clad with a pliable sheet metal (1) and the other made up by bare mineral wool, the sheet-metal clad mineral wool layer being pliable jointly with the sheet metal, **characterized in that** the mineral wool layer (2) comprises a slab assembly consisting of lamellar sheets of mineral wool with fibers at an orientation of 90° relative to the mineral wool element's (7) main surfaces, and that the mineral wool element (7) has at least two of its opposite ends provided with tongues and grooves (3, 4).

2. A mineral wool element (7) as set forth in claim 1, **characterized in that** the mineral wool layer (2) is adhesive-bonded to the sheet metal (1).

3. A mineral wool element (7) as set forth in claim 1 or 2, **characterized in that** the sheet metal (1) consists of a sheet metal which is rustproof or coated with an anti-corrosive covering.

4. A method for the fabrication of a mineral wool element (7) as set forth in any one of claims 1 to 3, **characterized in that** one of the two main surfaces of a mineral wool layer (2) is clad with a pliable sheet metal (1) and the other is left unclad, the mineral wool layer of a thus obtained mineral wool element being pliable jointly with the sheet metal.

5. A method for insulating curvilinear surfaces with mineral wool (2) and providing the same with a cladding sheet metal (1) protecting the outside of mineral wool installed on a curvilinear surface, **characterized in that** on a curvilinear surface being a substantially cylindrical storage tank's jacket surface with a radius of not less than 4 m are installed one or more mineral wool elements (7) as set forth in any one of claims 1 to 3, or mineral wool elements (7) fabricated according to the method of claim 4, by bending the mineral wool element in question substantially to the conformity with the curvilinear surface geometry in such a way that, of two opposite main surfaces of the mineral wool element, the one made up by bare mineral wool (2) becomes placed against said curvilinear surface to be insulated, and **in that** the mineral wool elements (7) are secured to each other with tongues and grooves (3, 4), present at least in a vertical direction thereof, and to the surface to be insulated with fastening elements (6).

6. A method as set forth in 5, **characterized in that** the fastening elements (6) are secured through the elements (7) at least across the tongue-and-groove joints (3, 4), such that the fastening element extends through both pairs of tongues and grooves in a tongue-and-groove joint.

7. A method as set forth in claim 5 or 6, **characterized in that** the installation placement of the mineral wool elements (7) is performed by means of hoists.

8. A wind-load resistant structure, comprising a curvilinear building surface, an insulation layer (2) of mineral wool installed thereon, and a sheet metal skin (1) protecting the outside of this insulation layer, wherein the curvilinear surface is a cylindrical storage tank's outer wall having a diameter of 4m or more, and said curvilinear surface has installed thereon one or more mineral wool elements (7) as set forth in any one of claims 1 to 3, or mineral wool elements (7) fabricated according to the method of claim 4, which has been brought by bending substantially to the conformity with a curvilinear surface geometry, and that, of two opposite main surfaces of the mineral wool element, the one made up by bare mineral wool (2) is placed against said curvilinear surface to be insulated, whereby the sheet metal skin (1) and the mineral wool layer (2) in attachment therewith function jointly as a composite structure, by virtue of which the membrane forces developed on the sheet metal skin (1) of a mineral wool element as a result of wind pressure and suction are passed into the mineral wool layer (2) having a sufficient compression strength, wherefrom the compression forces are passed further to a tank wall with uniform compression.

9. A structure as set forth in claim 8, wherein the mineral wool elements have vertical tongue-and-groove joints (3, 4) which are further secured by screws (6).

**Patentansprüche**

1. Mineralwolleelement (7), das eine isolierende Mineralwolleschicht (2) mit zwei gegenüberliegenden Hauptflächen umfasst, wobei eine der zwei gegenüberliegenden Hauptflächen der Mineralwolleschicht (2) mit einem biegsamen Metallblech (1) beschichtet ist und die andere aus bloßer Mineralwolle besteht, wobei die blechbeschichtete Mineralwolleschicht gemeinsam mit dem Metallblech biegsam ist, **dadurch gekennzeichnet, dass** die Mineralwolleschicht (2) einen plattenförmigen Aufbau umfasst, der aus Lamellenplatten von Mineralwolle mit Fasern in einer Ausrichtung von 90° relativ zu den Hauptflächen des Mineralwolleelementes (7) besteht, und dass bei dem Mineralwolleelement (7) mindestens zwei seiner gegenüberliegenden Enden mit Nuten und Federn (3, 4) versehen sind.

2.  Mineralwolleelement (7) nach Anspruch 1, **dadurch gekennzeichnet, dass** die Mineralwolleschicht (2) mittels Klebstoff am Metallblech (1) gebunden ist.

3.  Mineralwolleelement (7) nach Anspruch 1 oder 2, **dadurch gekennzeichnet, dass** das Metallblech (1) aus einem Metallblech besteht, das rostbeständig oder mit einer korrosionsbeständigen Abdeckung beschichtet ist.

4.  Verfahren zur Herstellung eines Mineralwolleelementes (7) nach einem der Ansprüche 1-3, **dadurch gekennzeichnet, dass** eine der zwei Hauptflächen einer Mineralwolleschicht (2) mit einem biegsamen Metallblech (1) bekleidet ist, und die andere unbekleidet bleibt, wobei die Mineralwolleschicht eines so erhaltenen Mineralwolleelementes gemeinsam mit dem Metallblech verformbar ist.

5.  Verfahren zum Isolieren von gekrümmten Flächen mit Mineralwolle (2) und zum Versehen derselben mit einem bekleidenden Metallblech (1), das die Außenseite der Mineralwolle schützt, die auf einer gekrümmten Fläche angebracht ist, **dadurch gekennzeichnet, dass** auf einer gekrümmten Fläche, die eine im Wesentlichen zylindrische Mantelfläche eines Lagertanks mit einem Radius von nicht kleiner als 4 m ist, ein oder mehrere Mineralwolleelemente (7) angebracht sind, wie in einem der Ansprüche 1-3 dargestellt, oder Mineralwolleelemente (7), die nach dem Verfahren von Anspruch 4 hergestellt sind, durch Biegen des betreffenden Mineralwolleelementes im Wesentlichen bis zur Übereinstimmung mit der Geometrie der gekrümmten Fläche derart, dass von zwei gegenüberliegenden Hauptflächen des Mineralwolleelementes die eine, die aus nackter Mineralwolle (2) hergestellt ist, gegen die zu isolierende gekrümmte Fläche gesetzt wird, und dadurch dass die Mineralwolleelemente (7) aneinander mit Nuten und Federn (3, 4) befestigt sind, die zumindest in einer vertikalen Richtung derselben vorhanden sind, und an der zu isolierenden Fläche mit Befestigungselementen (6) befestigt werden.

6.  Verfahren nach Anspruch 5, **dadurch gekennzeichnet, dass** die Befestigungselemente (6) durch die Elemente (7) zumindest über die Nut-und-Feder-Verbindungen (3, 4) derart gesichert sind, dass sich das Befestigungselement durch beide Paare von Federn und Nuten in einer Nut-und-Feder-Verbindung erstreckt.

7.  Verfahren nach Anspruch 5 oder 6, **dadurch gekennzeichnet, dass** das Anbringen der Mineralwolleelemente (7) mittels Aufzügen ausgeführt wird.

8.  Windlastbeständige Struktur, die eine gekrümmte Gebäudefläche umfasst, eine Isolierschicht (2) von Mineralwolle, darauf angebracht, und eine Metallblechhaut (1), die die Außenseite dieser Isolationsschicht schützt, wobei die gekrümmte Fläche eine zylindrische Außenwand eines Lagertanks ist, die einen Durchmesser von 4 m oder mehr hat, und wobei die gekrümmte Fläche darauf ein oder mehrere Mineralwolleelemente (7) angebracht enthält, wie in einem der Ansprüche 1-3 dargelegt, oder Mineralwolleelemente (7), die nach dem Verfahren von Anspruch 4 hergestellt sind, die durch Biegen im Wesentlichen in Übereinstimmung mit einer Geometrie der gekrümmten Fläche gebracht wurde, und dass von zwei gegenüberliegenden Hauptflächen des Mineralwolleelementes die eine, die aus nackter Mineralwolle (2) hergestellt ist, gegen die zu isolierende gekrümmte Fläche gestellt wird, wobei die Metallblechhaut (1) und die Mineralwolleschicht (2), die daran befestigt sind, gemeinsam als eine Verbundstruktur fungieren, dank der die Membrankräfte, die sich auf der Metallblechhaut (1) eines Mineralwolleelementes im Ergebnis von Winddruck und - sog entwickeln, in die Mineralwolleschicht (2) weitergeleitet werden, die eine ausreichende Kompressionsfestigkeit hat, von der die Kompressionskräfte weiter zur Tankwand mit gleichförmiger Kompression geleitet werden.

9.  Struktur nach Anspruch 8, wobei die Mineralwolleelemente vertikale Nut-und-Feder-Verbindungen (3, 4) haben, die ferner durch Schrauben (6) gesichert werden.

**Revendications**

1.  Élément en laine minérale (7), comprenant une couche de laine minérale isolante (2) dotée de deux surfaces principales opposées, une des deux surfaces principales opposées de la couche de laine minérale (2) étant revêtue d'une feuille métallique pliable (1) et l'autre composée de la laine minérale nue, la couche de laine minérale revêtue d'une feuille métallique étant pliable conjointement avec la feuille métallique, **caractérisé en ce que** la couche de laine minérale (2) comprend un assemblage de plaques consistant en feuilles lamellaires de laine minérale avec des fibres à une orientation de 90° par rapport aux surfaces principales de l'élément en laine minérale (7), et que l'élément en laine minérale (7) a au moins deux de ses extrémités opposées pourvues de languettes et de gorges (3, 4).

2. Élément en laine minérale (7) selon la revendication 1, **caractérisé en ce que** la couche de laine minérale (2) est liée par de l'adhésif à la feuille métallique (1)

3. Élément en laine minérale (7) selon la revendication 1 ou 2, **caractérisé en ce que** la feuille métallique (1) consiste en une feuille métallique qui est antirouille ou plaquée d'un revêtement anticorrosion.

4. Procédé de fabrication d'un élément en laine minérale (7) selon l'une quelconque des revendications à 3, **caractérisée en ce qu'**une des deux surfaces principales d'une couche de laine minérale (2) est revêtue d'une feuille métallique pliable (1) et que l'autre reste non revêtue, la couche de laine minérale d'un élément en laine minérale ainsi obtenue étant pliable conjointement avec la feuille métallique.

5. Procédés d'isolation de surfaces curvilinéaires avec de la laine minérale (2) et équipement de celle-ci avec une feuille métallique de revêtement (1) protégeant l'extérieur d'une laine minérale installée sur une surface curvilinéaire, **caractérisé en ce que**, sur une surface curvilinéaires qui est une surface de chemise de réservoir de stockage sensiblement cylindrique ayant un rayon non inférieur à 4 m, sont installés un ou plusieurs éléments en laine minérale (7) selon l'une quelconque des revendications 1 à 3, ou des éléments en laine minérale (7) fabriqués selon le procédé de la revendication 4 en pliant l'élément en laine minérale en question sensiblement pour qu'il soit en conformité avec la géométrie de la surface curvilinéaire de manière à ce que, parmi les deux surfaces principales opposées de l'élément en laine minérale, celle constituée par de la laine minérale nue (2) vienne se placer contre ladite surface curvilinéaire à isoler et **en ce que** les éléments en laine minérale (7) soient fixés les uns aux autres par des languettes et des gorges (3, 4) présentes au moins dans le sens vertical et sur la surface à isoler par des éléments de fixation (6).

6. Procédé selon la revendication 5, **caractérisé en ce que** les éléments de fixation (6) sont bloqués par les éléments (7) au moins en travers des joints à languettes et gorges (3, 4) de manière à ce que l'élément de fixation s'étende à travers les deux paires de languettes et de gorges dans un joint à languettes et à gorges.

7. Procédé selon la revendication 5 ou 6, **caractérisé en ce que** le placement lors de l'installation des éléments en laine minérale (7) est réalisé au moyen de treuils.

8. Structure résistant à la charge du vent, comprenant une surface de construction curvilinéaire, une couche d'isolation (2) en laine minérale installée dessus, et une pellicule en feuille métallique (1) protégeant l'extérieur de cette couche d'isolation, la surface curvilinéaire étant une surface de chemise de réservoir de stockage sensiblement cylindrique ayant un rayon non inférieur à 4 m, et étant installés sur ladite surface curvilinéaire un ou plusieurs éléments en laine minérale (7) selon l'une quelconque des revendications 1 à 3, ou des éléments en laine minérale fabriqués selon le procédé de la revendication 4, qui ont été amenés par pliage (7) sensiblement en conformité avec la géométrie de la surface curvilinéaire et que, parmi les deux surfaces principales opposées de l'élément en laine minérale, celle constituée par de la laine minérale nue (2) soit placée contre ladite surface curvilinéaire à isoler, la pellicule en feuille métallique (1) et la couche de laine minérale (2) qui lui est fixée fassent conjointement office de structure composite, en vertu de laquelle les forces de membrane développées sur la pellicule en feuille métallique (1) d'un élément en laine minérale en résultat de la pression et de l'aspiration du vent passent dans la couche de laine minérale (2) ayant une force de compression suffisante, ce qui a pour effet que les forces de compression passent plus loin vers une paroi du réservoir à compression uniforme.

9. Structure selon la revendication 8, dans laquelle les éléments en laine minérale sont des joints verticaux à languettes et gorges (3, 4) qui sont de plus fixés par des vis (6).

Fig. 1a (Prior art)

Fig. 1b

Fig. 2a

Fig. 2b

**Fig. 3**

**Fig. 4**

$q_w$     $g_i$

$q_{i\perp}$     $k=n-1,7....-2,3$

Fig. 5

**EP 2 252 456 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202006003586 U1
- US 4025680 A
- GB 2008491 A
- EP 1475224 A1